# EUROPÄISCHE PATENTSCHRIFT

(11) **EP 1 230 112 B1**
(45) Veröffentlichungstag und Bekanntmachung des Hinweises auf die Patenterteilung: **27.08.2003**
(21) Anmeldenummer: 01935983.5
(22) Anmeldetag: 25.04.2001
(51) Int. Cl.: B60S 1/08, B60S 1/18

(54) **WISCHVORRICHTUNG FÜR EINE SCHEIBE**
WINDSCREEN WIPER SYSTEM
SYSTEME D'ESSUIE-GLACE

(30) Priorität: 19.07.2000 DE 10035042
(43) Veröffentlichungstag der Anmeldung: 14.08.2002
(73) Patentinhaber: ROBERT BOSCH GMBH, 70442 Stuttgart (DE)
(72) Erfinder: METZ, Ulrich, 77855 Achern (DE)
(86) Internationale Anmeldenummer: DE0101550
(87) Internationale Veröffentlichungsnummer: WO02006094

(56) Entgegenhaltungen:
- EP-A- 0 585 010
- DE-A- 3 639 831
- DE-A- 19 732 520
- US-A- 5 201 094

## Beschreibung

### Stand der Technik

Die Erfindung betrifft eine Vorrichtung und ein Verfahren zum Wischen einer Scheibe nach Gattung der unabhängigen Ansprüche.

Im Stand der Technik sind schon zahlreiche derartige Vorrichtungen bekannt. Diese Vorrichtungen weisen einen Elektromotor, eine Mechanik sowie eines oder mehrere Wischblätter auf, welche vom Elektromotor pendelnd angetrieben werden. Am Kraftfahrzeug pendeln die Wischer dann zwischen einer oberen Wischblattendposition, die im Regelfall im Bereich der A-Säule des Fahrzeugs liegt und einer unteren Wischblattendposition, welche sich typischerweise am unteren Scheibenrand der Windschutzscheibe befindet.

Die Mechanik besteht üblicherweise aus einem Kurbelgetriebe aus Schub- und Kurbelstangen, welche durch Lager miteinander verbunden sind. Da beim Betreiben der Wischvorrichtung ständig hohe Lagerkräfte quer zur Lagerachse auftreten, müssen diese aus besonders hochwertigen Materialien gefertigt sein um einen vorzeitigen Verschleiß zu verhindern. Oder aber die Wischblattendpositionen müssen genügend weit von der A-Säule bzw. dem unteren Scheibenrand entfernt angelegt sein, um durch Verschleiß bedingte Verschiebungen dieser Position abzufangen.

DE-A-197 3250 offenbart den Gegenstand der Oberbegriffe der Ansprüche 1,2,10 und 11.

### Vorteile der Erfindung.

Die erfindungsgemäße Vorrichtung mit den Merkmalen des Hauptanspruchs hat den Vorteil, dass Spiele der Mechanik, welche sich mit zunehmender Anzahl von Lastwechseln durch den Verschleiß der Lager vergrößern, mittels einer Steuereinrichtung kompensiert werden. Da sich die Lager des Kurbelgetriebes durch die ständigen Lastwechsel abnützen und die Lagerqualität dadurch schlechter wird, verschieben sich die Umkehrpositionen der Wischblätter auf der Scheibe sich mit zunehmendem Alter des Fahrzeugs bzw. mit zunehmendem Alter der Wischvorrichtung. Diese Spiele der Mechanik werden erfindungsgemäß mit Hilfe einer Steuereinrichtung kompensiert, so daß während der gesamten Lebensdauer der Wischvorrichtung die Wischblätter immer an derselben Position umkehren.

Vorteilhaft ist es auch, die Spiele der Mechanik in Abhängigkeit der Lebensdauer zu kompensieren, da sich durch Erschütterungen während des Fahrbetriebs das Lagerspiel durch das Eigengewicht der Einzelteile der Wischvorrichtung ebenfalls vergrößert.

Es ist auch denkbar, eine lastwechsel- und lebensdauerabhängige Kompensation sich überlagernd einzusetzen.

Durch die in den Unteransprüchen aufgeführten Merkmale sind vorteilhafte Weiterbildungen der erfindungsgemäßen Vorrichtung möglich.

So ist es besonders vorteilhaft, wenn die Antriebsendpositionen, in denen der reversierbare Elektromotor seine Drehrichtung ändert in Abhängigkeit der Lebensdauer oder mit zunehmender Anzahl von Lastwechseln verändert werden. Auf diese Weise können die Wischblattendpositionen während der gesamten Lebensdauer genau eingehalten werden, ohne dass beispielsweise kostenintensive Sensoren im Bereich der Windschutzscheibe oder der Wischblätter die genaue Stellung der Wischblätter erfassen müssten.

Wird die Lebensdauer der Mechanik durch die vom Kraftfahrzeug gefahrene Strecke bestimmt, so ist vorteilhafterweise kein separater Zeitmesser im Fahrzeug notwendig. Die vom Kraftfahrzeug gefahrene Strecke liegt durch den Kilometerzähler, den jedes Kraftfahrzeug aufweist, immer vor.

Weiters ist es vorteilhaft, die Kompensation stufenweise, insbesondere alle fünfzig- bis zweihunderttausend, vorzugsweise alle hunderttausend Wischperioden oder Lastwechsel erfolgen zu lassen. Die Kompensation wird auf diese Weise nur dann vorgenommen, wenn eine meßbare Differenz zwischen der gewünschten Wischblattendposition und der tatsächlichen Wischblattendposition erreicht ist.

Ebenso ist es vorteilhaft, die Steuereinrichtung derart auszubilden, dass die Kompensation alle zwei- bis zehntausend Kilometer erfolgt. Auf diese Weise kann eine stufenweise Kompensation vorgenommen werden, auch wenn das Fahrzeug nur bei niederschlagsarmem Wetter betrieben wird. Dies ist insbesondere bei Cabriolets von Vorteil, die typischerweise nur bei trockenem Wetter auf unebenen Landstraßen benützt werden, wo die Fahrzeugerschütterungen naturgemäß größer sind als auf Autobahnen.

Vorteilhaft ist es auch, die Kompensation kontinuierlich nach jeder Wischperiode erfolgen zu lassen. So wird immer eine optimale Wischblattendposition angefahren und es müssen auch keine zusätzlichen Signale von Kilometerzähler, Uhr oder Wischperiodenzähler verwendet werden.

Weiters ist es vorteilhaft, die Steuereinrichtung so auszubilden, dass die Kompensation nur an der oberen Wischblattendposition, im Bereich der A-Säule vorzunehmen. Der Bereich der A-Säule ist der kritische Bereich, in dem das Wischblatt einerseits möglichst nah an die A-Säule herangeführt werden soll, um ein möglichst großes Wischfeld zu erreichen, andererseits aber, insbesondere im schnellen Wischbetrieb, die A-Säule nicht berühren soll. Durch die Spielzunahme der Mechanik kann dies jedoch leicht geschehen wenn dies nicht kompensiert wird. In der unteren Wischblattendposition ist dies weniger kritisch, da diese im Regelfall für das Sichtfeld des Fahrers nur von untergeordneter Bedeutung ist.

### Zeichnung

Ein Ausführungsbeispiel der Erfindung ist in den Zeichnungen dargestellt und in der nachfolgenden Beschreibung näher erläutert. Es zeigen:
Figur 1 eine erfindungsgemäße Wischvorrichtung in schematischer Darstellung,
Figur 2 einen Teil einer erfindungsgemäßen Wischvorrichtung mit einem Wischblatt in der unteren Wischblattendposition,
Figur 3 eine erfindungsgemäße Wischvorrichtung wie in Figur 2, jedoch mit Wischblatt in der oberen Wischblattendposition und
Figur 4 eine schematische Darstellung eines erfindungsgemäßen Verfahrens.

### Beschreibung des Ausführungsbeispiels

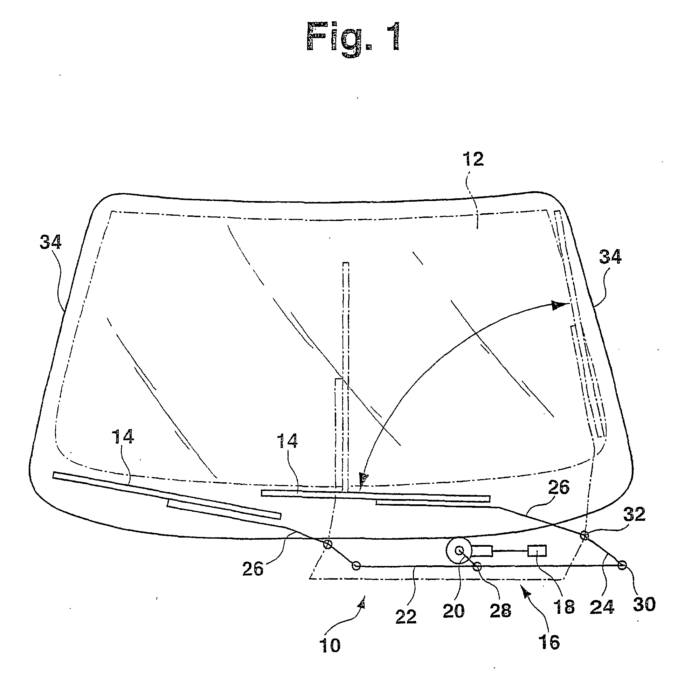

In Figur 1 ist eine erfindungsgemäße Wischvorrichtung 10 auf einer Scheibe 12 dargestellt. Die Wischvorrichtung 10 besteht aus zwei Wischblättern 14 und einer Mechanik 16 sowie einer Steuereinrichtung 18.

Die Mechanik 16 besteht dabei aus einer Kurbelstange 20, einer Schubstange 22 und einer Abtriebskurbel 24. Daran befestigt sind Wischerarme 26, welche die Wischblätter 14 tragen. Kurbelstange 20, Schubstange 22, Antriebskurbel 24 und Wischerarme 26 sind dabei drehbar mittel drei Lagern miteinander verbunden. Die Kurbelstange 20 und die Schubstange 22 über das Schubstangenlager 28, die Schubstange und die Abtriebskurbel über das Abtriebskurbellager 30 und die Abtriebskurbel 24 mit dem Wischerarm 26 über das Wischerlager 32.

Die Scheibe 12, ist hier eine Windschutzscheibe eines Kraftfahrzeuges. Diese ist an ihren Seiten 34 von den A-Säulen des Kraftfahrzeuges eingerahmt.

Die Wischblätter 14 sind mittels durchgezogener Linien in einer unteren Wischblattendposition 36 und mittels Strichpunktlinien in einer oben Wischblattendposition 38 gezeichnet. Der Bereich zwischen diesen beiden Positionen 36 und 38 schließt dabei einen Pendelwinkel P ein.

Da es sich bei der gezeigten Wischeranlage um eine Gleichlaufwischanlage handelt, befindet sich das Wischblatt 14 in der oberen Wischblattendposition 38 im Bereich der A-Säule des Kraftfahrzeugs, also im Bereich einer der Seiten 34 der Scheibe 12.

Angetrieben wird die Mechanik 16 von einem Antrieb 40, der als reversierbarer, elektronisch kommutierbärer Elektromotor 40 ausgebildet ist. Dieser ist mit der Steuereinrichtung 18 verbunden, welche den Elektromotor 40 steuert.

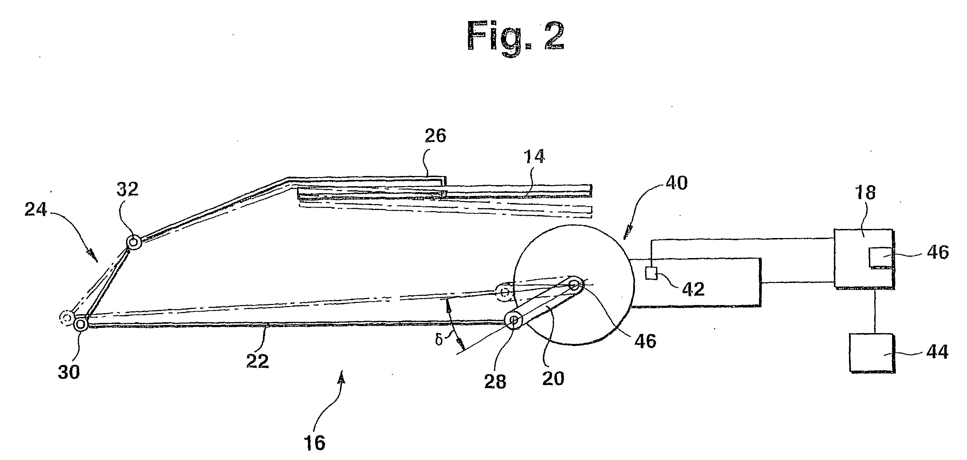

In Figur 2 ist ein Ausschnitt aus Figur 1 dargestellt. Das Wischblatt 14, der Wischerarm 26 ist über das Wischerlager 32 mit.der Abtriebskurbel 24 verbunden. Diese wiederum ist über das Abtriebskurbellager 30 mit der Schubstange 22 verbunden, welche über das Schubstangenlager 28 und die Kurbelstange 20 vom Elektromotor 40 angetrieben ist. Der Elektromotor 40 ist dabei mit einem Hall-Sensor 42 ausgestattet, der Signale über die Position der Ankerwelle des Elektromotors 40 an die Steuereinrichtung 18 weiterleitet. Diese ist daher immer über die aktuelle Position der Kurbelstange 20 informiert. Außerdem kann die Steuereinrichtung 18 beispielsweise mit einem Kilometerzähler 44 verbunden sein und/oder eine Zähleinrichtung 46 aufweisen, die die Anzahl der Reversionen des Elektromotors 40 aufnimmt.

Der Antrieb 40 befindet sich hier gerade in einer unteren Antriebsendposition 50, wodurch sich das Wischblatt 14 in der unteren Wischblattendposition 36 befindet.

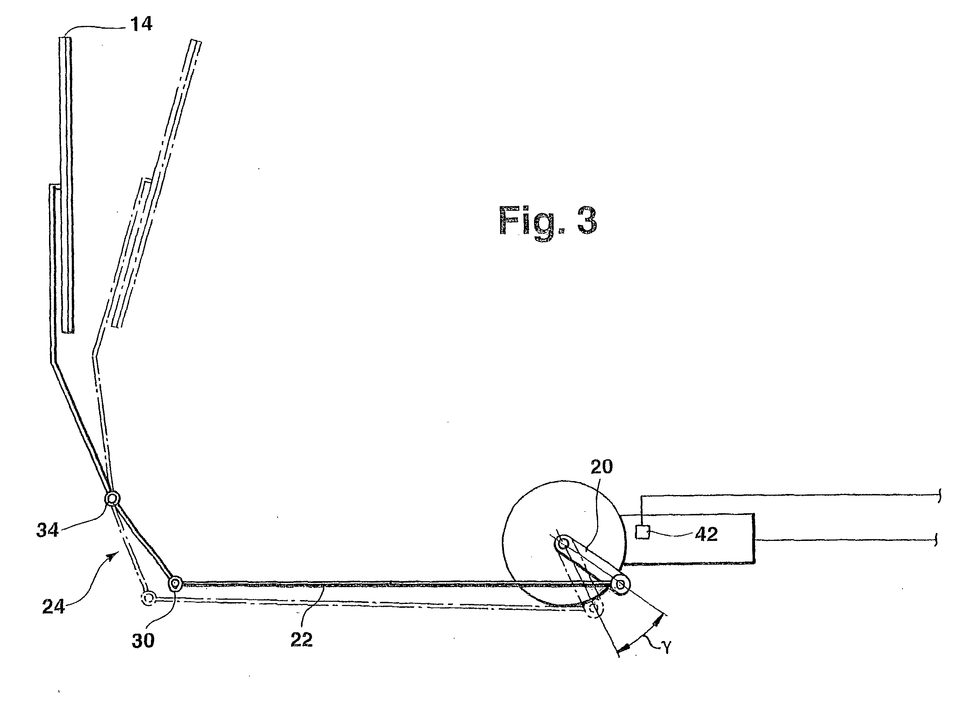

In Figur 3 ist der gleiche Bereich wie in Figur 2 dargestellt, jedoch befindet sich das Wischblatt 14 in der oberen Wischblattendposition 38 und die Kurbelstange 20 daher in der oberen Antriebsendposition.

Im Folgenden soll die Funktion der Wischvorrichtung erläutert werden.

Der Elektromotor 40 bewegt, über eine Schnecke und ein Schneckenrad, eine Abtriebswelle 46, mit der die Kurbelstange 20 drehfest verbunden ist. Zur Bewegung des Wischblattes 14 vollführt die Kurbelstange 20 durch den Elektromotor 40 eine pendelnde Bewegung zwischen einer oberen Antriebsendposition 48 und einer unteren Antriebsendposition 50. Diese entsprechen jeweils der oberen Wischblattendposition 38 und der unteren Wischblattendposition 36.

Aufgrund der verschiedenen Umwelteinflüsse, welche auf die Mechanik 16, insbesondere auf die Lager 28, 30, 32 wirken, vergrößert sich im Laufe der Zeit das Lagerspiel der einzelnen Lager 28, 30, 32, was zu einer Verschiebung der Wischblattendpositionen 36, 38 führt. Dies hätte beispielsweise zur Folge, dass das Wischblatt 14 bei einem schnellen Wischbetrieb in der oberen Wischblattendposition 38 an der A-Säule des Kraftfahrzeugs durch ein Überschwingen anschlagen kann, wodurch dieses innerhalb kürzester Zeit beschädigt werden würde. In einem langsamen Wischbetrieb, in dem das Wischblatt über die Scheibe 12 geschleppt wird, würde die obere Wischblattendposition 38 immer weiter nach innen rücken und dadurch der Pendelwinkel P immer kleiner werden.

Erfindungsgemäß ist die Steuereinrichtung 18 derart ausgebildet, dass mit zunehmender Lebensdauer, bzw. mit zunehmender Anzahl von Lastwechseln die untere bzw. obere Antriebsendposition 48, 50 verschoben wird. Diese Verschiebung hängt beispielsweise auch von der Geschwindigkeit ab, mit der das Wischblatt 14 über die Scheibe 12 gleitet. Wie weiter oben erläutert, kann es daher sinnvoll sein, bei einem schnellen Wischbetrieb die obere Antriebsendposition 48 zu kleineren Pendelwinkeln P hin zu verschieben um ein anschlagen des Wischblatts 14 an der A-Säule zu verhindern, während bei einem langsamen Wischbetrieb die obere Antriebsendposition 48 zu größeren Pendelwinkeln P hin, um einen Winkel γ verschoben wird. Die Kompensation kann dabei beliebig auf das Kraftfahrzeug abgestimmt werden.

Analog erfolgt dieselbe Kompensation, wie in Figur 2 dargestellt, in der unteren Wischblattendposition 36. Mit steigender Lebensdauer wird hier die untere Antriebsendposition 50 in einem langsamen Wischbetrieb zu größeren Pendelwinkeln P hin, um einen Winkel δ verschoben.

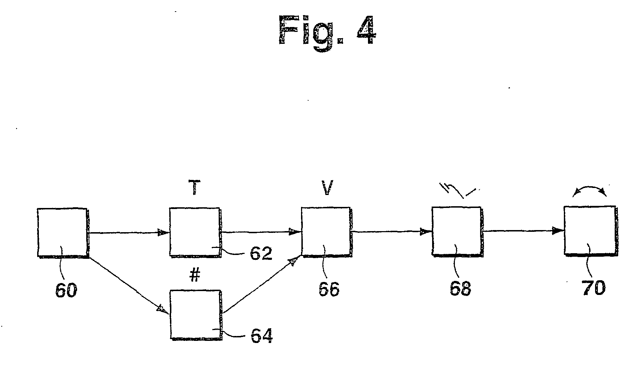

In Figur 4 ist ein Beispiel für ein erfindungsgemäßes Verfahren dargestellt. In einem ersten Schritt 60 wird die Wischvorrichtung in einen schnellen oder langsamen Wischbetrieb geschaltet. Daraufhin in einem zweiten Schritt 62 und/oder 64 die Lebens-/Betriebsdauer und/oder die Anzahl der bisher erfolgten Lastwechsel bestimmt. In einem dritten Schritt wird dann die Geschwindigkeit der Wischblätter 14 bestimmt. Dies erfolgt beispielsweise derart, daß festgestellt wird ob die Wischvorrichtung in schnellen oder langsamen Wischbetrieb geschaltet wurde. In Abhängigkeit der Ergebnisse des zweiten und dritten Schritts 62 bis 66 werden nun in einem vierten Schritt 68 die Antriebsendpositionen 48 und 50 des Antriebs 40 festgelegt und im fünften Schritt 70 der Antrieb 40 gestartet.

## Patentansprüche

1. Wischvorrichtung, für eine Scheibe (12), insbesondere eines Kraftfahrzeugs, mit einem Wischblatt (14), mit einer Mechanik (16), über die das Wischblatt angetrieben ist und mit einer Steuereinrichtung (18), **dadurch gekennzeichnet, daß** die Steuereinrichtung (18), die Spiele der Mechanik (16) lastwechselabhängig kompensiert.

2. Wischvorrichtung, für eine Scheibe (12), insbesondere eines Kraftfahrzeugs, mit einem Wischblatt (14), mit einer Mechanik (16), über die das Wischblatt angetrieben ist und mit einer Steuereinrichtung (18), **dadurch gekennzeichnet, daß** die Steuereinrichtung (18), die Spiele der Mechanik (16) lebensdauerabhängig kompensiert.

3. Wischvorrichtung, nach Anspruch 1 oder 2, **dadurch gekennzeichnet, daß** ein insbesondere elektronisch reversierbarer Antrieb (40) vorgesehen ist, daß die Mechanik (16) derart ausgebildet ist, daß sie das Wischblatt (14) mittels des Antriebs (40) zwischen einer oberen und einer unteren Wischblattendposition (38, 36) pendelnd bewegt, daß den zwei Wischblattendpositionen (38, 36) zwei Antriebsendpositionen (48, 50) zugeordnet sind und daß die Steuereinrichtung (18) derart ausgebildet ist, daß sie die Antriebsendpositionen (48, 50) mit zunehmender Anzahl an Lastwechseln und/oder zunehmender Lebensdauer der Mechanik (16), zur Kompensation der Spiele verändert.

4. Wischvorrichtung, nach Anspruch 2 oder 3, **dadurch gekennzeichnet, daß** die Lebensdauer der Mechanik (16) durch die vom Kraftfahrzeug gefahrene Strecke bestimmt ist.

5. Wischvorrichtung nach Anspruch 1 oder 3, **dadurch gekennzeichnet, daß** die Steuereinrichtung (18) derart ausgebildet ist, daß die Kompensation stufenweise, insbesondere alle 50.000 bis 200.000, vorzugsweise alle 100.000 Wischperioden (P) oder Lastwechsel, erfolgt.

6. Wischvorrichtung nach Anspruch 4, **dadurch gekennzeichnet, daß** die Steuereinrichtung (18) derart ausgebildet ist, daß die Kompensation stufenweise, insbesondere alle 2000 bis 10000 km, vorzugsweise alle 5000 km erfolgt.

7. Wischvorrichtung nach einem der Ansprüche 1 bis 4, **dadurch gekennzeichnet, daß** die Steuereinrichtung (18) derart ausgebildet ist, daß die Kompensation kontinuierlich vor/nach jeder Wischperiode erfolgt.

8. Wischvorrichtung nach einem der Ansprüche 3 bis 7, **dadurch gekennzeichnet, daß** die Steuereinrichtung (18) derart ausgebildet ist, daß sie die Kompensation nur an der, der oberen Wischblattendposition (38) entsprechenden Antriebsendposition (48) vornimmt.

9. Wischvorrichtung nach einem der vorhergehenden Ansprüche, **dadurch gekennzeichnet, daß** die Steuereinrichtung (18) derart ausgebildet ist, daß die Kompensation in Abhängigkeit der Bewegungsgeschwindigkeit der Mechanik (16) erfolgt.

10. Verfahren zur Steuerung einer Wischvorrichtung(10), insbesondere eines Kraftfahrzeuges, wobei ein, insbesondere elektronisch reversierbarer, Antrieb (40) über eine Mechanik (16) ein Wischblatt (14) antreibt, **dadurch gekennzeichnet, daß** die Spiele der Mechanik (16) lastwechselabhängig kompensiert werden.

11. Verfahren zur Steuerung einer Wischvorrichtung (10), insbesondere eines Kraftfahrzeugs, wobei ein, insbesondere elektronisch reversierbarer, Antrieb (40) über eine Mechanik (16) ein Wischblatt (14) antreibt, **dadurch gekennzeichnet, daß** die Spiele der Mechanik (16) lebensdauerabhängig kompensiert werden.

12. Verfahren, nach Anspruch 10 oder 11, **dadurch gekennzeichnet, daß** die Mechanik (16) das Wischblatt (14) zwischen einer oberen und einer unteren Wischblattendposition (38, 36) pendelnd antreibt, daß die zwei Wischblattendpositionen (38, 36), welchen zwei Antriebsendpositionen (48, 50) zugeordnet sind, einen Pendelwinkel (P) einschließen, und daß die Steuereinrichtung (18) die Antriebsendpositionen (48, 50) mit zunehmender Anzahl an Lastwechseln und/oder zunehmender Lebensdauer der Mechanik (16), zur Kompensation der Spiele verändert.

13. Verfahren, nach Anspruch 11 oder 12, **dadurch gekennzeichnet, daß** die Lebensdauer der Mechanik (16) durch die vom Kraftfahrzeug gefahrene Strecke bestimmt wird.

14. Verfahren nach Anspruch 10 oder 12, **dadurch gekennzeichnet, daß** die Steuereinrichtung (18) die Kompensation stufenweise, insbesondere alle 50.000 bis 200.000, vorzugsweise alle 100.000 Wischperioden (P) oder Lastwechsel vornimmt.

15. Verfahren nach Anspruch 13, **dadurch gekennzeichnet, daß** die Steuereinrichtung (18) die Kompensation stufenweise, insbesondere alle 2000 bis 10000 km, vorzugsweise alle 5000 km vornimmt.

16. Verfahren nach einem der Ansprüche 10 bis 13, **dadurch gekennzeichnet, daß** die Steuereinrichtung (18) die Kompensation kontinuierlich vor/nach jeder Wischperiode vornimmt.

17. Verfahren nach einem der Ansprüche 12 bis 16, **dadurch gekennzeichnet, daß** die Steuereinrichtung (18) die Kompensation nur an der, der oberen Wischblattendposition (36, 38) entsprechenden Antriebsendposition (48, 50) vornimmt.

18. Verfahren nach einem der Ansprüche 10 bis 17, **dadurch gekennzeichnet, daß** die Steuereinrichtung (18) die Kompensation in Abhängigkeit der Bewegungsgeschwindigkeit der Mechanik (16) vornimmt.

## Claims

1. Wiping device, for a screen (12), in particular of a motor vehicle, with a wiping blade (14), with a mechanism (16), via which the wiping blade is driven, and with a control means (18), **characterized in that** the control means (18) compensates the plays of the mechanism (16) as a function of the load change.

2. Wiping device, for a screen (12), in particular of a motor vehicle, with a wiping blade (14), with a mechanism (16), via which the wiping blade is driven, and with a control means (18), **characterized in that** the control means (18) compensates the plays of the mechanism (16) as a function of the useful life.

3. Wiping device, according to Claim 1 or 2, **characterized in that** an, in particular, electronically reversible drive (40) is provided, **in that** the mechanism (16) is designed in such a way that it moves the wiping blade (14) pendulously between an upper and a lower wiping-blade end position (38, 36) by means of the drive (40), **in that** the two wiping-blade end positions (38, 36) are assigned two drive end positions (48, 50), and **in that** the control means (18) is designed in such a way that it modifies the drive end positions (48, 50) with an increasing number of load changes and/or with an increasing useful life of the mechanism (16), for compensating the plays.

4. Wiping device, according to Claim 2 or 3, **characterized in that** the useful life of the mechanism (16) is determined by the distance driven by the motor vehicle.

5. Wiping device according to Claim 1 or 3, **characterized in that** the control means (18) is designed in such a way that the compensation takes place in steps, in particular every 50,000 to 200,000, preferably every 100,000 wiping periods (P) or load changes.

6. Wiping device according to Claim 4, **characterized in that** the control means (18) is designed in such a way that the compensation takes place in steps, in particular every 2,000 to 10,000 km, preferably every 5,000 km.

7. Wiping device according to one of Claims 1 to 4, **characterized in that** the control means (18) is designed in such a way that the compensation takes place continuously before/after each wiping period.

8. Wiping device according to one of Claims 3 to 7, **characterized in that** the control means (18) is designed in such a way that it carries out the compensation only at the drive end position (48) corresponding to the upper wiping-blade end position (38).

9. Wiping device according to one of the preceding claims, **characterized in that** the control means (18) is designed in such a way that the compensation takes place as a function of the speed of movement of the mechanism (16).

10. Method for controlling a wiping device (10), in particular of a motor vehicle, and, in particular, electronically reversible drive (40) driving a wiping blade (14) via a mechanism (16), **characterized in that** the plays of the mechanism (16) are compensated as a function of the load change.

11. Method for controlling a wiping device (10), in particular of a motor vehicle, and, in particular, electronically reversible drive (40) driving a wiping blade (14) via a mechanism (16), **characterized in that** the plays of the mechanism (16) are compensated as a function of the useful life.

12. Method, according to Claims 10 or 11, **characterized in that** the mechanism (16) drives the wiping blade (14) pendulously between an upper and a lower wiping-blade end position (38, 36), **in that** the two wiping-blade end positions (38, 36), which are assigned two drive end positions (48, 50), form a pendulum angle (P), and **in that** the control means (18) modifies the drive end positions (48, 50) with an increasing number of load changes and/or with an increasing useful life of the mechanism (16), for compensating the plays.

13. Method, according to Claim 11 or 12, **characterized in that** the useful life of the mechanism (16) is determined by the distance driven by the motor vehicle.

14. Method, according to Claim 10 or 12, **characterized in that** the control means (18) carries out the compensation in steps, in particular every 50,000 to 200,000, preferable every 100,000 wiping periods (P) or load changes.

15. Method, according to Claim 13, **characterized in that** the control means (18) carries out the compensation in steps, in particular every 2,000 to 10,000 km, preferably every 5,000 km.

16. Method, according to one of Claims 10 to 13, **characterized in that** the control means (18) carries out the compensation continuously before/after each wiping period.

17. Method, according to one of Claims 12 to 16, **characterized in that** the control means (18) carries out the compensation only at the drive end position (48, 50) corresponding to the upper wiping-blade end position (36, 38).

18. Method, according to one of Claims 10 to 17, **characterized in that** the control means (18) carries out the compensation as a function of the speed of movement of the mechanism (16).

## Revendications

1. Dispositif d'essuie-glace, pour une vitre (12), en particulier d'un véhicule automobile, comprenant un balai d'essuie-glace (14), un mécanisme (16) par lequel le balai d'essuie-glace est entraîné, et un dispositif de commande (18),
**caractérisé en ce que**
le dispositif de commande (18) compense les jeux du mécanisme (16) en fonction des changements de charge.

2. Dispositif d'essuie-glace, pour une vitre (12), en particulier d'un véhicule automobile, avec un balai d'essuie-glace (14), avec un mécanisme (16) par lequel le balai d'essuie-glace est entraîné, et avec un dispositif de commande (18),
**caractérisé en ce que**
le dispositif de commande (18) compense les jeux du mécanisme (16) en fonction de la durée de vie.

3. Dispositif d'essuie-glace selon la revendication 1 ou 2,
**caractérisé en ce qu'**
il est prévu un entraînement (40) réversible en particulier par voie électronique, le mécanisme (16) est configuré de telle façon qu'il déplace le balai d'essuie-glace (14) au moyen de l'entraînement (40) en oscillation entre une position finale supérieure et une position finale inférieure (38, 36) de l'essuie-glace, deux positions finales (48, 50) de l'entraînement sont associées aux deux positions finales (38, 36) de l'essuie-glace et le dispositif de commande (18) est configuré de telle façon qu'il modifie les positions finales (48, 50) de l'entraînement avec l'augmentation du nombre des changements de charge et/ou avec l'augmentation de la durée de vie du mécanisme (16) en vue de la compensation des jeux.

4. Dispositif d'essuie-glace selon la revendication 2 ou 3,
**caractérisé en ce que**
la durée de vie du mécanisme (16) est déterminée par la distance parcourue par le véhicule automobile.

5. Dispositif d'essuie-glace selon la revendication 1 ou 3,
**caractérisé en ce que**
le dispositif de commande (18) est configuré de telle façon que la compensation se produise par degrés, en particulier tous les 50 000 à 200 000, de préférence tous les 100 000 cycles de balayage (P) ou changements de charge.

6. Dispositif d'essuie-glace selon la revendication 4,
**caractérisé en ce que**
le dispositif de commande (18) est configuré de telle façon que la compensation se produise par degrés, en particulier tous les 2 000 à 10 000 km, de préférence tous les 5 000 km.

7. Dispositif d'essuie-glace selon l'une quelconque des revendications 1 à 4,
**caractérisé en ce que**
le dispositif de commande (18) est configuré de telle façon que la compensation se produise en continu avant/après chaque cycle de balayage.

8. Dispositif d'essuie-glace selon l'une quelconque des revendications 3 à 7,
**caractérisé en ce que**
le dispositif de commande (18) est configuré de telle façon qu'il opère la compensation uniquement dans la position finale (48) de l'entraînement correspondant à la position finale supérieure (38) de l'essuie-glace.

9. Dispositif d'essuie-glace selon l'une quelconque des revendications précédentes,
**caractérisé en ce que**
le dispositif de commande (18) est configuré de telle façon que la compensation se produise en fonction de la vitesse de déplacement du mécanisme (16).

10. Procédé pour la commande d'un dispositif d'essuie-glace (10), en particulier d'un véhicule automobile,
dans lequel un entraînement (40) réversible, en particulier par voie électronique, entraîne un balai d'essuie-glaces (14) par l'intermédiaire d'un mécanisme (16),
**caractérisé en ce que**
les jeux du mécanisme (16) sont compensés en fonction des changements de charge.

11. Procédé pour la commande d'un dispositif d'essuie-glace (10), en particulier d'un véhicule automobile, dans lequel un entraînement (40) réversible, en particulier par voie électronique, entraîne un balai d'essuie-glace (14) par l'intermédiaire d'un mécanisme (16),
**caractérisé en ce que**
les jeux du mécanisme (16) sont compensés en fonction de la durée de vie.

12. Procédé selon la revendication 10 ou 11,
**caractérisé en ce que**
le mécanisme (16) entraîne le balai d'essuie-glace (14) en oscillation entre une position finale supérieure et une position finale inférieure (38, 36) de l'essuie-glace, les deux positions finales (38, 36) de l'essuie-glace, auxquelles sont associées deux positions finales (48, 50) de l'entraînement, forment un angle de pivotement (P), et le dispositif de commande (18) modifie les positions finales (48, 50) de l'entraînement avec l'augmentation du nombre de changements de charge et/ou avec l'augmentation de la durée du vie du mécanisme (16), en vue de la compensation des jeux.

13. Procédé selon la revendication 11 ou 12,
**caractérisé en ce que**
la durée de vie du mécanisme (16) est déterminée par la distance parcourue par le véhicule automobile.

14. Procédé selon la revendication 10 ou 12,
**caractérisé en ce que**
le dispositif de commande (18) opère la compensation par degrés, en particulier tous les 50 000 à 200 000, de préférence tous les 100 000 cycles de balayage (P) ou changements de charge.

15. Procédé selon la revendication 13,
**caractérisé en ce que**
le dispositif de commande (18) opère la compensation par degrés, en particulier tous les 2 000 à 10 000 km, de préférence tous les 5 000 km.

16. Procédé selon l'une quelconque des revendications 10 à 13,
**caractérisé en ce que**
le dispositif de commande (18) opère la compensation en continu avant/après chaque cycle de balayage.

17. Procédé selon l'une quelconque des revendications 12 à 16,
**caractérisé en ce que**
le dispositif de commande (18) opère la compensation uniquement dans la position finale (48, 50) de l'entraînement correspondant à la position finale supérieure (36, 38) de l'essuie-glace.

18. Procédé selon l'une quelconque des revendications 10 à 17,
**caractérisé en ce que**
le dispositif de commande (18) opère la compensation en fonction de la vitesse de déplacement du mécanisme (16).
